Europäisches Patentamt

European Patent Office

Office européen des brevets

(11) Veröffentlichungsnummer: **0 341 320**
A1

## (12) EUROPÄISCHE PATENTANMELDUNG
Veröffentlicht nach Art. 158 Abs. 3 EPÜ

(21) Anmeldenummer: 89900375.0

(22) Anmeldetag: 11.11.88

Daten der zugrundeliegenden internationalen Anmeldung:

(86) International application number:
PCT/SU88/00227

(87) International publication number:
WO89/04534 (18.05.89 89/11)

(51) Int. Cl.³: **G 11 B 5/02**

(30) Priorität: 13.11.87 SU 4327019

(43) Veröffentlichungstag der Anmeldung:
15.11.89 Patentblatt 89/46

(84) Benannte Vertragsstaaten:
CH DE FR GB LI NL

(71) Anmelder: VSESOJUZNY
NAUCHNO-ISSLEDOVATELSKY INSTITUT TELEVIDENIA
I RADIOVESCHANIA
ul. 3 Khoroshevskaya, 12
Moscow, 123298(SU)

(72) Erfinder: FRIDLYAND, Igor Vladimirovich
ul. Profsojuznaya, 98-8-68
Moscow, 117485(SU)

(74) Vertreter: Nix, Frank Arnold, Dr.
Kröckelbergstrasse 15
D-6200 Wiesbaden(DE)

(54) **VORRICHTUNG UND VERFAHREN ZUM MAGNETISCHEN SPEICHERN.**

(57) Beim Verfahren zur magnetischen Aufzeichnung wird ein elektrisches Signal auf einem magnetischen Träger (1) mit Hilfe von Magnetköpfen (8) aufgezeichnet, die eine schwingende Bewegung in einer zur Oberfläche des magnetischen Trägers (1) senkrecht liegenden Ebene mit Geschwindigkeiten ausführen, die sich nach dem Sinusgesetz ändern, gleiche Maximalwerte sowie gleiche und zur Periode des elektrischen Steuersignals im ganzzahligen Verhältnis stehende Schwingungsperioden haben, aber für jeden Magnetkopf (8) verschiedene Schwingungsphasen aufweisen.

Die für die Durchführung des Verfahrens zur magnetischen Videoaufzeichnung entwickelte Einrichtung enthält einen magnetischen Träger (1), Magnetköpfe (8) zur Aufzeichnung eines elektrischen Signals in Zeilen und einen unbeweglichen Magnetkopf (10) zur Längsaufzeichnung eines elektrischen Steuersignals. Mit Vorrichtungen (14) zur Bewegung der Magnetköpfe (8) sind die Ausgänge miteinander in Reihe geschalteter Verzögerungsglieder (19) verbunden. Die Einrichtung enthält auch eine Reihenschaltung eines ersten Frequenzvervielfachers (20), bei dem der Eingang an eine elektrische Steuersignalquelle (7) und der Ausgang an den Eingang der Vorrichtung (14) zur Bewegung des ersten Magnetkopfes (8) und an den Eingang des ersten Verzögerungsgliedes (19) angeschlossen sind, sowie eines Impulsformers (21), eines zweiten Frequenzvervielfachers (22), eines Impulszählers (23) und eines Umschalters (24), dessen Ausgänge an die Wicklungen (12) der Magnetköpfe (8) geschaltet sind.

FIG.1

# VERFAHREN UND EINRICHTUNG ZUR MAGNETISCHEN AUFZEICHNUNG

## Gebiet der Technik

Die Erfindung bezieht sich auf das Gebiet der Informationsspeicherung, insbesondere auf Verfahren und Einrichtungen zur magnetischen Aufzeichnung.

## Stand der Technik

Weitgehend ist ein Verfahren zur magnetischen Aufzeichnung von digitalen Tonsignalen bekannt (CH, P, 660809), bei dem ein elektrisches Signal auf einem fortschreitend bewegten magnetischen Träger zeilenförmig mittels eines Magnetkopfes aufgezeichnet wird, der eine Schwingungsbewegung bezüglich des magnetischen Trägers ausführt. Die Schwingungsbewegung des Magnetkopfes kann sinusförmig, sägezahnförmig oder dreieckig in perpendikulärer Richtung zur Ebene des magnetischen Trägers sein. Die Magnetköpfe sind dabei stets an die Quelle des elektrischen Informationssignals angeschlossen.

Es ist auch eine Einrichtung zur magnetischen Aufzeichnung allgemein bekannt (CH, P, 660809), die einen beweglichen Magnetkopf enthält, dem ein die Information tragendes elektrisches Signal zugeführt wird. Der Magnetkopf ist an einem Halter mit Feder befestigt und kann in Bezug auf den magnetischen Träger in Schwingungsbewegung versetzt werden. Am Halter sind auch Induktionsspulen befestigt, die zwischen Permanentmagneten verschiebbar sind.

Bei diesem Verfahren und dieser für die magnetische Aufzeichnung von digitalen Tonsignalen bestimmten Einrichtung ist die Bewegungsgeschwindigkeit des Magnetkopfes bei seiner Maximalauslenkung gleich Null, wobei das elektrische Signal nicht aufgezeichnet wird und Verluste an der zu speichernden Information entstehen.

Die für die Realisierung dieses Verfahrens bestimmte Einrichtung ist groß, da die Vorrichtung zur Schwingungsbewegung der Magnetköpfe große Abmessungen hat.

Es ist auch eine Einrichtung zur magnetischen Aufzeichnung weitgehend bekannt (JP, P, 61-45402), bei der die Magnetköpfe an eine Quelle des elektrischen Signals mit

Bild- und Toninformation angeschlossen sind und in Bezug auf den bewegten magnetischen Träger hin und her senkrecht zur Bewegung des letzteren geschwenkt werden. Die Hin- und Herbewegung der Magnetköpfe bewirken piezoelektrische Wandler, an die eine Spannung von entgegengesetzter Polarität angelegt wird. Infolgedessen bewegen sich die Magnetköpfe in gegenseitig entgegengesetzten Richtungen. Bei der Gegenphasigkeit der an die piezoelektrischen Wandler angelegten Spannungen erreichen die Bewegungsgeschwindigkeiten der Magnetköpfe den Nullwert gleichzeitig, wobei keine Aufzeichnung des elektrischen Signals stattfindet und sich damit Verluste an der zu speichernden Information ergeben.

In der Einrichtung zur magnetischen Videoaufzeichnung sind keine Bauelemente vorgesehen, welche die Übereinstimmung der Bewegungsbahn der Magnetköpfe mit der entsprechenden Spur der magnetischen Aufzeichnung bei der Wiedergabe des elektrischen Informationssignals gewährleisten. Dies macht den Einbau eines zusätzlichen Magnetkopfes notwendig, der ein elektrisches Steuersignal aufzeichnet und an eine elektrische Steuersignalquelle angeschlossen ist.

Es ist auch ein Verfahren zur magnetischen Videoaufzeichnung weitgehend bekannt (vgl. "Radioelektronika i svjaz", 1986, Nr. 2, Verlag "Znanie", Moskau, I. V. Fridland, V. G. Soshnikov, "Heim-Videorecorder", S. 3, 27, 36, 37), bei dem ein die Bildinformation enthaltendes frequenzmoduliertes Signal auf einem magnetischen Träger in Schrägspuren mit Hilfe von Magnetköpfen aufgezeichnet wird, die sich in Bezug auf den magnetischen Träger drehen und in Schwingbewegung versetzt werden. Bei der Videoaufzeichnung werden die Magnetköpfe an die Bildsignalquelle abwechselnd angeschlossen. An diese Bildsignalquelle wird jeweils der Magnetkopf geschaltet, der im gegebenen Zeitpunkt den magnetischen Träger berührt. Auf die Längsspur des magnetischen Trägers wird ein elektrisches Steuersignal mittels eines unbeweglichen Magnetkopfes aufgezeichnet, der an eine Quelle des elektrischen Steuersignals angeschlossen ist. Dadurch wird die Bewegungsbahn der Magnetköpfe in Übereinstimmung mit den aufgezeichneten Videospuren bei der Videosignalwiedergabe gebracht. Bei der

Videosignalwiedergabe wird das vom Ausgang der Magnetköpfe gelieferte frequenzmodulierte Signal demoduliert und in das zusammengesetzte Fernsehsignal umgewandelt.

Allgemein ist auch eine Einrichtung zur magnetischen Videoaufzeichnung bekannt (vgl. "Radioelektronika i svjaz", 1936, Nr. 2, Verlag "Znanije", Moskau; I. V.Fridland, V. G. Soshnikov "Heim-Videorecorder", S. 20--25), in der ein magnetischer Träger mit Hilfe einer Transportwalze des Bandlaufwerks vorwärts bewegt wird. Die Magnetköpfe, die das frequenzmodulierte Bildsignal zeilenweise aufzeichnen, sind beim Aufzeichnen an die Quelle des frequenzmodulierten Signals, nämlich an den Bildsignalkanal angeschlossen. Die Magnetköpfe sind an einer Scheibe der drehbaren Trommel befestigt und können in der zur Trommelrotationsachse parallel liegenden Richtung in Schwingbewegung versetzt werden. Die Magnetköpfe sind mit einem Autotracking-System elektrisch verbunden, welches die Schwingbewegung der Magnetköpfe bewirkt. Die Trommelwelle ist mit einem Elektromotor verbunden, der an ein System zur automatischen Regelung der Rotationsfrequenz des Elektromotors angeschlossen ist. Der Eingang dieses Systems ist mit einer Bildfrequenzsignal-Schiene verbunden, die z. B. Bildaustastimpulse führt. Der Elektromotor ist auch mit einem System zur automatischen Regelung der Transportgeschwindigkeit des magnetischen Trägers verbunden, das an den Antriebsmotor des Bandlaufwerks angeschlossen ist. Ein unbeweglicher Magnetkopf, mit dessen Hilfe die Längsaufzeichnung eines elektrischen Referenz-Steuersignals erfolgt, ist an die Referenzsignalschiene geschaltet. Die Rotationsebene der Trommel liegt unter einem spitzen Winkel zur Transportrichtung des magnetischen Trägers an der Berührungsstelle des Magnetkopfes und dieses Trägers. Den Magnetköpfen wird aus dem Bildsignalkanal das frequenzmodulierte Signal abwechselnd zugeführt. Das System zur automatischen Regelung der Rotationsfrequenz des Elektromotors gewährleistet die erforderliche Phasenbeziehung des Referenzsignals und der Impulse des Elektromotor-Tachometers bei der Aufzeichnung und bei der Wiedergabe. Das System zur automatischen Regelung der Transportgeschwindig-

keit des magnetischen Trägers sorgt für die Übereinstimmung der Aufzeichnungsspuren und der Bewegungsbahn der Magnetköpfe auf dem magnetischen Träger bei der Wiedergabe.

Für die zeilenweise erfolgende Aufzeichnung des elektrischen Signals mit Bildinformation wird eine drehbare Trommel benutzt, in der elektronische Baugruppen wie z. B. Spannungsverstärker angeordnet sind, deren Lebensdauer infolge der Einwirkung der bei der Trommelrotation entstehenden Fliehkraft herabgesetzt wird. In der Trommel befinden sich auch rotierende Vorrichtungen, die zur Spannungszuführung von den Spannungsverstärkern des Autotracking-Systems zu den Vorrichtungen zur Bewegung der Magnetköpfe erforderlich sind. Beim Verschleiß von Reibungsflächen dieser Vorrichtungen kommt es zur Funkenbildung, wobei im wiedergegebenen Bild Störungen erscheinen. Die Trommel stellt eine komplizierte und teuere Baugruppe dar, bei der die Herstellungstoleranzen einige Mikrometer betragen. Für die Serienfertigung der Trommel braucht man Präzisionsausrüstungen, da die Ausführung der spiralförmigen Führungsrille an der Trommelscheibe hohe Präzision erfordert.

Offenbarung der Erfindung

Der Erfindung liegt die Aufgabe zugrunde, ein Verfahren zur magnetischen Aufzeichnung zu schaffen, bei dem die Parameter der Bewegung der Magnetköpfe in Bezug auf den magnetischen Träger eine höhere Zuverlässigkeit der magnetischen Aufzeichnung ergeben, sowie eine Einrichtung zur Realisierung dieses Verfahrens zu entwickeln, deren schaltungstechnische Lösung eine konstruktive Vereinfachung der Einrichtung gewährleistet.

Das Wesen der Erfindung liegt darin, daß beim Verfahren zur magnetischen Aufzeichnung, bei dem ein elektrisches Informationssignal auf einem bewegten magnetischen Träger zeilenweise mit Hilfe von Magnetköpfen aufgezeichnet wird, die in Bezug auf den magnetischen Träger eine Schwingungsbewegung ausführen und an eine Informationssignalquelle abwechselnd angeschlossen werden, und bei dem die Längsaufzeichnung eines elektrischen Steuersignals auf einer besonderen Spur des magnetischen Trägers mittels eines unbeweglichen Magnetkopfes erfolgt, der an eine elektrische Steuersignalquelle angeschlossen ist, -- die für die Zeilenaufzeichnung des elektrischen Informationssignals bestimmten Magnetköpfe erfindungsgemäß in einer zur Oberfläche des magnetischen Trägers perpendikulär liegenden Ebene mit Geschwindigkeiten bewegt werden, die sich nach dem Sinusgesetz ändern und gleiche Maximalwerte, gleiche und zur Periode des elektrischen Steuersignals in ganzzahligem Verhältnis stehende Schwingungsperioden haben sowie für jeden Magnetkopf verschiedene Schwingungsphasen aufweisen, wobei der Anschluß jedes Magnetkopfes an die elektrische Informationssignalquelle und seine darauffolgende Abschaltung von dieser Quelle bei einer Bewegungsgeschwindigkeit des Magnetkopfes gleich modulo $V_{max}$ cos $\frac{\pi}{2n}$ mit $V_{max}$ als Maximalwert der Bewegungsgeschwindigkeit der Magnetköpfe und $n \geq 2$ als Anzahl der Magnetköpfe erfolgen.

Für die Erhöhung der Zuverlässigkeit der magnetischen Aufzeichnung ist es zweckmäßig, für die Schwingungsphasen der Magnetköpfe zur Zeilenaufzeichnung des elektrischen Informationssignals folgende Beziehungen festzulegen:

$$\varphi_{i-1} < \varphi_i \tag{1}$$

$$\varphi_i - \varphi_{i-1} = \frac{\pi}{n} \tag{2}$$

Dabei sind

$\varphi_i$ der Phasenwinkel der Magnetkopfschwingungen,

$i$ die Nummer des Magnetkopfes,

$i-1$ die vorhergehende Magnetkopfnummer,

$n \geq 2$ die Anzahl von Magnetköpfen.

Das Wesen der Erfindung liegt auch darin, daß in der Einrichtung zur Durchführung des Verfahrens zur magnetischen Videoaufzeichnung mit einem vorwärts transportierbaren magnetischen Träger und mit Magnetköpfen zur zeilenweise erfolgenden Aufzeichnung des Informationssignals, die mit einer Quelle dieses Informationssignals elektrisch verbunden und mit Vorrichtungen zur Schwingungsbewegung der Magnetköpfe mechanisch gekoppelt sind, sowie mit einem unbeweglichen Magnetkopf, der für die Längsaufzeichnung eines elektrischen Steuersignals bestimmt und an die Quelle dieses elektrischen Steuersignals angeschlossen ist, erfindungsgemäß eine Kette miteinander in Reihe geschalteter Verzögerungsglieder zusätzlich verwendet wird, deren Anzahl (n-1) beträgt, wobei n die Zahl der Magnetköpfe ist, und der Ausgang jedes Verzögerungsgliedes mit einer entsprechenden Vorrichtung zur Bewegung des zweiten, des dritten, ... des n-ten Magnetkopfes elektrisch verbunden ist; sowie eine Reihenschaltung folgender Baueinheiten zusätzlich eingebaut ist: eines ersten Frequenzvervielfachers, bei dem der Eingang an die Quelle des elektrischen Steuersignals und der Ausgang an den Eingang der Vorrichtung zur Bewegung des ersten Magnetkopfes sowie an den Eingang des ersten Verzögerungsgliedes angeschlossen sind; eines Impulsformers; eines zweiten Frequenzvervielfachers; eines Impulszählers mit dem am Ausgang des Impulsformers liegenden Einstelleingang sowie eines Umschalters, bei dem die Steuereingänge an die Stellenausgänge des Impulszählers, der Analogsignaleingang an die Quelle des elektrischen Informationssignals und die Ausgänge an die Wicklungen der Magnetköpfe angeschlossen sind, wobei die Magnetköpfe so eingebaut sind, daß der Magnetleiter jedes Magnetkopfes bei der Schwingungsbewegung die Oberfläche des magnetischen Trägers stets berührt.

Bei dem Verfahren zur magnetischen Aufzeichnung werden die Magnetköpfe in Bezug auf den magnetischen Träger in Schwingungsbewegung versetzt, und dadurch wird es möglich, die Vorrichtung zur Bewegung der Magnetköpfe konstruktiv zu vereinfachen. Infolgedessen werden die Störungen im wiedergegebenen Bild verringert und erhöht sich die Zuverlässigkeit der magnetischen Aufzeichnung.

Kurze Beschreibung der Zeichnungen

Die Erfindung wird in der nachstehenden ausführlichen Beschreibung des Verfahrens zur magnetischen Aufzeichnung und der Einrichtung zu seiner Verwirklichung sowie eines konkreten Ausführungsbeispiels der Einrichtung und anhand der Zeichnungen näher erläutert. Hierbei zeigen

Fig. 1 ein elektrisches Blockschaltbild der Einrichtung zur Realisierung des Verfahrens zur magnetischen Aufzeichnung gemäß der Erfindung:

Fig. 2 einen magnetischen Träger und Magnetköpfe (Draufsicht) gemäß der Erfindung:

Fig. 3 einen magnetischen Träger und Magnetköpfe (Seitenansicht) gemäß der Erfindung:

Fig. 4a ein Zeitdiagramm der Spannung an den Magnetköpfen:

Fig. 4b ein Zeitdiagramm der Bewegung der Magnetköpfe:

Fig. 4c ein Zeitdiagramm der Bewegungsgeschwindigkeit der Magnetköpfe.

Bevorzugte Ausführungsform der Erfindung

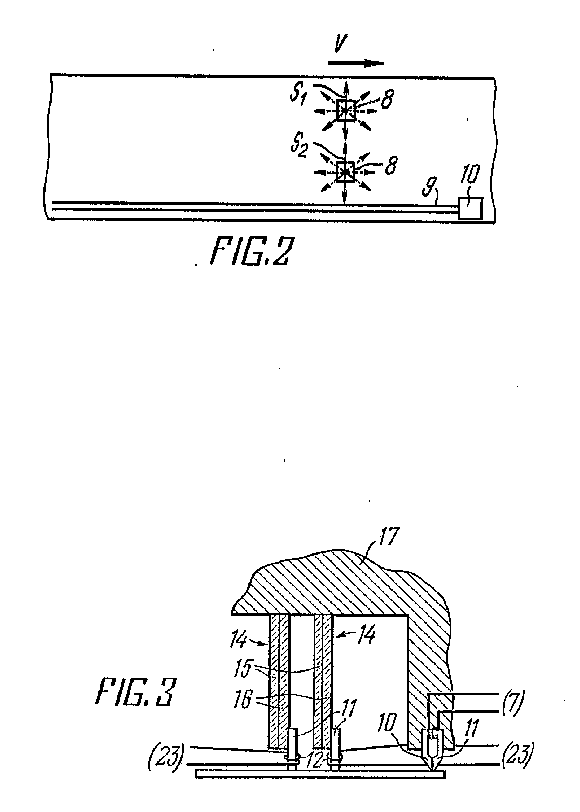

Das Verfahren zur magnetischen Aufzeichnung wird mit einer Einrichtung realisiert, die einen als Magnetband ausgeführten magnetischen Träger 1 (Fig. 1) enthält, der zwischen einer Abwickel- und einer Aufnahmebaugruppe 2 bzw. 3 des in der Zeichnung nicht gezeigten Bandlaufwerks liegt. Das Laufwerk ist nach einem allgemein bekannten Schema aufgebaut (vgl. "Radioelektronika i svjaz", 1936, Nr. 2, S. 20, 21, Verlag "Znanije", Moskau, I. V. Fridland, V. G. Soshnikov, "Heim-Videorecorder"). Der magnetische Träger wird mittels einer Transportwalze 4 des Laufwerks transportiert, die mit einem Elektromotor 5 mechanisch verbunden ist. Der Eingang des Elektromotors 5 ist an den Ausgang eines Systems 6 zur automatischen Regelung der Bewegungsgeschwindigkeit des Magnetträgers angeschlossen, das nach einer bekannten Schaltung aufgebaut ist (vgl. V. I. Parhomenko "Technik der magnetischen Videoaufzeichnung", Verlag "Energija", Moskau, 1978, S. 114--117). Der Eingang des Systems 6 zur automatischen Regelung der Bewegungsgeschwindigkeit des magnetischen Trägers ist mit einer Quelle 7 des elektrischen Steuersignals verbunden. Die Aufzeichnung in Zeilen (Quer- oder Schrägaufzeichnung) bewirken die Magnetköpfe 3. Zur Längsaufzeichnung auf einer besonderen Spur 9 (Fig. 2) des magnetischen Trägers 1 dient ein unbeweglicher Magnetkopf 10 (Fig. 1), der an die Quelle 7 des elektrischen Steuersignals angeschlossen ist. Jeder Magnetkopf enthält einen Magnetleiter 11 und eine Wicklung 12 (Fig. 3). Die Magnetköpfe 8 sind so eingebaut, daß bei ihrer Schwingungsbewegung die Magnetleiter 11 an der Stelle des Arbeitsspaltes 13 die Oberfläche des magnetischen Trägers 1 stets berühren. Jeder Magnetkopf 8 ist mit einer Vorrichtung 14 zur Bewegung der Magnetköpfe verbunden, die als piezoelektrischer Wandler ausgebildet ist. Der piezoelektrische Wandler besteht aus bimorph verkitteten piezoelektrischen Platten 15, 16 (Fig. 3), bei denen ein Ende in einem unbeweglichen Halter 17 fest eingespannt ist. Am anderen Ende der Platten 15, 16 sind Magnetleiter 11 mit Wicklungen 12 der Magnetköpfe 8 befestigt. An den Halter 17 ist auch der unbewegliche Magnetkopf 10 fest angesetzt, der den magnetischen Träger 1 berührt. Die Vorrichtungen 14 (Fig. 1) zur Bewegung der Magnetköpfe sind mit den Ausgängen der Spannungsverstärker 18 verbunden, deren Zahl der Anzahl der Magnetköpfe 8 entspricht. Die Einrichtung enthält eine Kette miteinander in Reihe geschalteter Verzögerungsglieder 19, deren Anzahl (n-1) beträgt, wobei n die Zahl der Magnetköpfe 8 ist. Der Ausgang jedes Verzögerungsgliedes 19 ist an den Eingang der Spannungsverstärker 18 angeschlossen, die mit den Vorrichtungen 14 zur Bewegung des zweiten, des dritten,..., des n-ten Magnetkopfes verbunden sind. Der Eingang des Spannungsverstärkers 18, der mit der Vorrichtung 14 zur Bewegung des ersten Magnetkopfes 8 verbunden ist, und der Eingang des ersten Verzögerungsgliedes 19 liegen am Ausgang des ersten Frequenzvervielfachers 20. Der Eingang des ersten Frequenzvervielfachers 20 ist an die Quelle 7 des elektrischen Steuersignals angeschlossen. Der Ausgang des ersten Frequenzvervielfachers 20 ist auch mit dem Eingang eines Impulsformers 21 verbunden, der einen nach bekannter Schaltung ausgeführten Komparator darstellt (vgl. J. Rutkovski, "Integrierte Operationsverstärker", 1970, Verlag "Mir", Moskau, S. 212-214). Der Ausgang des Impulsformers 21 liegt am Eingang eines zweiten Frequenzvervielfachers 22, dessen Ausgang an den ersten Eingang eines Impulszählers 23 geschaltet ist. Der zweite Einstelleingang des Impulszählers 23 hat mit dem Ausgang des Impulsformers 21 Verbindung. Die Stellenausgänge des Impulszählers 23 sind an die Steuereingänge eines Umschalters 24 geführt. Der Analogsignaleingang des Umschalters 24 ist an eine elektrische Informationssignalquelle 25, vorliegend an die Quelle des frequenzmodulierten Signals, nämlich an den Bildsignalkanal angeschlossen. Die Ausgänge des Umschalters 24 sind mit den Wicklungen 12 der Magnetköpfe 8 verbunden.

Das Verfahren zur magnetischen Aufzeichnung wird wie folgt am Betrieb der Einrichtung zu seiner Verwirklichung erläutert.

In Fig. 1 ist die für die Realisierung des Verfahrens zur magnetischen Aufzeichnung bestimmte Einrichtung mit n beweglichen Magnetköpfen 8 dargestellt, wobei n > 2 ist.

Fig. 2 und 3 zeigen eine Ausführungsform der Einrichtung mit zwei beweglichen Magnetköpfen 8.

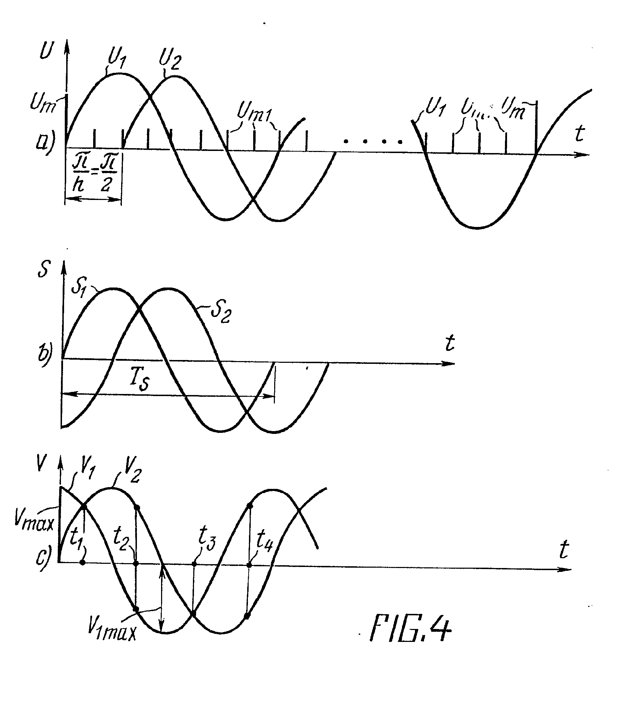

In Fig. 4a, b, c sind Zeitdiagramme der Spannung U an den beweglichen Magnetköpfen 8, der Bewegungen der Magnetköpfe 8 und der Geschwindigkeiten der beweglichen Magnetköpfe für die Variante der Einrichtung mit zwei beweglichen Magnetköpfen 8 angeführt.

Beim Verfahren zur magnetischen Videoaufzeichnung wird ein elektrisches Informationssignal, nämlich ein frequenzmoduliertes Signal auf einem bewegten magnetischen Träger 1 (Fig. 1) mit Hilfe der Magnetköpfe 8 zeilenweise aufgezeichnet.

Gleichzeitig erfolgt die Längsaufzeichnung eines elektrischen Steuersignals auf einer besonderen Spur 9 des magnetischen Trägers 1 mittels des unbeweglichen Magnetkopfes 10, der an die Quelle 7 des elektrischen Steuersignals angeschlossen ist.

Möglich ist auch die magnetische Aufzeichnung von elektrischen digitalen und Analogsignalen, z. B. von Ton- und Bildsignalen.

Bei der Aufzeichnung gewährleistet das System 6 zur automatischen Regelung der Bewegungsgeschwindigkeit des magnetischen Trägers die Stabilisierung der Transportgeschwindigkeit des magnetischen Trägers 1. Vom Ausgang der elektrischen Steuersignalquelle 7 gelangen Spannungsimpulse an den Eingang des Elektromotors 5, der die Transportwalze 4

des Bandlaufwerks in Bewegung setzt.

Die Magnetköpfe 3 werden in Bezug auf den magnetischen Träger 1 in der zu seiner Oberfläche senkrecht liegenden Ebene durch Anlegung einer Sinusspannung $U_1$, $U_2$ (Fig. 4a) an die Platten 15, 16 (Fig. 2) des piezoelektrischen Wandlers der Vorrichtung 14 zur Bewegung der Magnetköpfe in Schwingungsbewegung gebracht. Die Magnetköpfe haben gleiche Bewegungsbahnen $S_1$, $S_2$ (Fig. 4b). Die Bewegungsgeschwindigkeiten $V_1$, $V_2$ (Fig. 4c) der Magnetköpfe 3 ändern sich nach dem Sinusgesetz mit gleichen maximalen Geschwindigkeitswerten.

Die Magnetköpfe 3 bewegen sich mit gleicher Schwingungsperiode $T_s$ (Fig. 4b), die ein Vielfaches der Periode des elektrischen Steuersignals ist. Vom Ausgang der elektrischen Steuersignalquelle 7 wird dem unbeweglichen Magnetkopf 10 ein niederfrequentes impulsförmiges Steuersignal $U_m$ (Fig. 4a) zugeführt, das auf dem magnetischen Träger 1 aufgezeichnet wird und an den Eingang des ersten Frequenzvervielfachers 20 gelangt. Am Ausgang des ersten Frequenzvervielfachers 20 wird ein sinusförmiges Signal $U_1$ (Fig. 4a) geformt, das dem Eingang des ersten Verzögerungsgliedes 19 zugeführt wird, an dessen Ausgang ein sinusförmiges Signal $U_2$ erscheint. Somit werden auf die Magnetköpfe 3 phasenverschobene Signale $U_1$, $U_2$ gegeben. Infolge der Einwirkung der Verzögerungsglieder 19 verhalten sich die Schwingungsphasen der das elektrische Informationssignal zeilenweise aufzeichnenden Magnetköpfe 3 wie folgt:

$$\varphi_{i-1} < \varphi_i \qquad (1)$$

$$\varphi_i - \varphi_{i-1} = \frac{\pi}{n} \qquad (2)$$

Dabei sind

$\varphi_i$ der Schwingungsphasenwinkel des Magnetkopfes 3,

i die Nummer des Magnetkopfes 3;

$n \geq 2$ die Anzahl der Magnetköpfe 3,

i -1 die vorhergehende Nummer des Magnetkopfes 3.

Der Anschluß jedes Magnetkopfes 3 an die elektrische Informationssignalquelle 25 (Fig. 1) und seine darauffolgende Abschaltung von dieser Quelle erfolgen hierbei bei einer Bewegungsgeschwindigkeit des Magnetkopfes 3 gleich modulo

$V = V_{max} \cos \frac{\pi}{2n}$, wobei $V_{max}$ der Maximalwert der Bewegungsgeschwindigkeit der Magnetköpfe 8 und $n \geq 2$ die Anzahl der Magnetköpfe 8 sind. Die Bewegungsgeschwindigkeit der Magnetköpfe 8, bei der sie an die Informationssignalquelle 25 in den Zeitpunkten $t_1$ und $t_2$, $t_3$ und $t_4$ an- und darauf von ihr abgeschaltet werden, beträgt für die Einrichtung mit zwei Magnetköpfen 8 (Fig. 1):

$$V = V_{max} \cos \frac{\pi}{4} \qquad \text{(Fig. 4b)},$$

wobei $V_{max}$ die Maximalgeschwindigkeit der Bewegung des Magnetkopfes 8 (Fig. 1) und n die Anzahl der Magnetköpfe 8 bedeuten.

Der Anschluß der Magnetköpfe 8 an die elektrische Informationssignalquelle 25 und ihre darauffolgende Abschaltung von dieser Quelle bei einer Bewegungsgeschwindigkeit der Magnetköpfe 8, die sich vom zulässigen Wert $V_d = V_{max} \cos \frac{\pi}{2n}$ unterscheidet, führen zur Frequenzbandreduktion beim aufgezeichneten Informationssignal.

Der Impulsformer 21, der zweite Frequenzvervielfacher 22 und der Impulszähler 23 bewirken den Anschluß der elektrischen Informationssignalquelle 25 an den Magnetkopf 8, dessen Bewegungsgeschwindigkeit bis zum Wert $V_d = V_{max} \cos \frac{\pi}{2n}$ steigt. Vom Ausgang des ersten Frequenzvervielfachers 20 gelangt das sinusförmige Signal $U_1$ (Fig. 4a) an den Eingang des Impulsformers 21 (Fig. 1). Am Ausgang des Impulsformers 21 erscheint ein Impulssignal, das dem Eingang des zweiten Frequenzvervielfachers 22 zugeführt wird. Der zweite Frequenzvervielfacher 22 erzeugt ein impulsförmiges Signal $U_{m1}$ (Fig. 4a), dessen Periode ein ganzzahliges Verhältnis mit der Periode der Sinusspannung $U_1$ bildet. Das impulsförmige Signal $U_{m1}$ wird auf den Impulszähler 23 (Fig. 1) gegeben, der bereits durch das vom Ausgang des Impulsformers 21 gelieferte Impulssignal $U_m$ (Fig. 4a) in den Nullzustand eingestellt ist. Der Umschalter 24, der einen Satz von Schaltern darstellt, gewährleistet den Anschluß des Magnetkopfes 8 an die elektrische Informationssignalquelle 25 in Abhängigkeit vom Kode des Zählers 23 bei einer Bewegungsgeschwindigkeit des Magnetkopfes 8 gleich dem Wert $V_d$ und die darauffolgende Abschaltung bei einer Bewegungsgeschwin-

dikeit des Magnetkopfes 3, die kleiner als der zulässige Wert $V_d$ ist. Da die Periode der Sinusspannungskurve $U_1$, $U_2$ (Fig. 4a) und dementsprechend der Bewegungskurven $S_1$, $S_2$ (Fig. 4b) der Magnetköpfe 3 (Fig. 1) sowie der Bewegungsgeschwindigkeitskurven $V_1$, $V_2$ (Fig. 4c) der Magnetköpfe 3 (Fig. 1) durch die Impulse $U_{m1}$ (Fig. 4a) in eine große Zahl gleicher Teile geteilt werden kann, so können der Anschluß der Magnetköpfe 3 (Fig. 1) an die Quelle 25 bei der Bewegungsgeschwindigkeit gleich $V_d$ und die Abschaltung des Magnetkopfes 3 bei der Bewegungsgeschwindigkeit gleich $V_d$ mit hoher Genauigkeit verwirklicht werden.

Bei der Wiedergabe wird dem ersten Frequenzvervielfacher 20 das vom unbeweglichen Magnetkopf 10 wiedergegebene Signal zugeführt, welches mit dem Signal der elektrischen Steuersignalquelle 7 synchron ist. Infolgedessen werden die Magnetköpfe 3 mit ihren aufgezeichneten Zeilen in Übereinstimmung gebracht, wobei die Schwingungsphasen der Magnetköpfe 3 die gleichen wie bei der Aufzeichnung bleiben. Der Wiedergabevorgang läuft ähnlich dem Aufzeichnungsvorgang ab. Der Umschalter 16 schließt die Ausgänge der Magnetköpfe 3 abwechselnd an den Eingang der Quelle 25 an und gewährleistet die kontinuierliche Erzeugung des Bildsignals am Ausgang der Quelle 25, die einen Bildsignalkanal darstellt.

Die Anwendung der vorliegenden Erfindung gestattet es, die Abmessungen der Einrichtung zur magnetischen Aufzeichnung und ihre Kosten herabzusetzen.

Gewerbliche Anwendbarkeit

Die Erfindung kann für die Aufzeichnung von Ton- und Bildsignalen sowie anderer Arten analoger und digitaler Signale in der Radartechnik, in der Rechentechnik, in der Medizin und in der Fernsehtechnik Anwendung finden.

PATENTANSPRÜCHE

1. Verfahren zur magnetischen Aufzeichnung, bei dem ein elektrisches Informationssignal auf einem bewegten magnetischen Träger (1) zeilenweise mit Hilfe von Magnetköpfen (3) aufgezeichnet wird, die in Bezug auf den magnetischen Träger (1) eine Schwingungsbewegung ausführen und an die elektrische Informationssignalquelle (25) abwechselnd angeschlossen werden, und bei dem die Längsaufzeichnung eines elektrischen Steuersignals auf einer besonderen Spur (9) des magnetischen Trägers (1) mittels eines unbeweglichen Magnetkopfes (10) erfolgt, der an eine elektrische Steuersignalquelle (7) angeschlossen ist, d a d u r c h   g e k e n n -
z e i c h n e t , daß die zur Zeilenaufzeichnung des elektrischen Informationssignals dienenden Magnetköpfe (3) in einer zur Oberfläche des magnetischen Trägers (1) senkrecht liegenden Ebene mit Geschwindigkeiten bewegt werden, die sich nach dem Sinusgesetz ändern und gleiche Maximalwerte, gleiche und zur Periode des elektrischen Steuersignals im ganzzahligen Verhältnis stehende Schwingungsperioden haben sowie für jeden Magnetkopf (3) verschiedene Schwingungsphasen aufweisen, wobei der Anschluß jedes Magnetkopfes (3) an die elektrische Informationssignalquelle (25) und seine darauffolgende Abschaltung von dieser Quelle bei einer Bewegungsgeschwindigkeit des Magnetkopfes (3) gleich modulo $V_{max} \cos \frac{\pi}{2n}$ erfolgen, wenn $V_{max}$ den Maximalwert der Bewegungsgeschwindigkeit der Magnetköpfe (3) und $n \geqslant 2$ die Zahl der Magnetköpfe (3) bedeuten.

2. Verfahren nach Anspruch 1, d a d u r c h   g e -
k e n n z e i c h n e t , daß für die Schwingungsphasen der Magnetköpfe (3) zur Zeilenaufzeichnung des elektrischen Informationssignals folgende gegenseitige Beziehungen festgelegt sind:

$$\varphi_{i-1} < \varphi_i \tag{1}$$

$$\varphi_i - \varphi_{i-1} = \frac{\pi}{n} \tag{2}$$

worin

$\varphi_i$ der Phasenwinkel der Schwingungen des Magnetkopfes (3),

$i$ die Nummer des Magnetkopfes (3),

- 14 -

(i-1) die vorige Nummer des Magnetkopfes (3),

n ≥ 2 die Anzahl von Magnetköpfen (3)

sind.

3. Einrichtung zur Durchführung des Verfahrens zur magnetischen Aufzeichnung nach Ansprüchen 1, 2 mit einem vorwärts transportierbaren magnetischen Träger (1) und mit Magnetköpfen (3) zur zeilenweise erfolgenden Aufzeichnung des elektrischen Informationssignals, die mit einer Quelle (25) des elektrischen Informationssignals elektrisch verbunden und mit Vorrichtungen (14) zur Schwingungsbewegung der Magnetköpfe mechanisch gekoppelt sind, sowie mit einem unbeweglichen Magnetkopf (10), der für die Längsaufzeichnung eines elektrischen Steuersignals bestimmt und an die Quelle (7) dieses elektrischen Steuersignals angeschlossen ist, g e k e n n z e i c h n e t d u r c h eine zusätzliche Kette miteinander in Reihe geschalteter Verzögerungsglieder (19), deren Anzahl (n-1) beträgt, wobei n die Zahl der Magnetköpfe (3) ist und der Ausgang jedes Verzögerungsgliedes (19) mit einer entsprechenden Vorrichtung (14) zur Bewegung des zweiten, des dritten, ..., des n-ten Magnetkopfes (3) elektrisch verbunden ist, sowie durch eine Reihenschaltung folgender zusätzlicher Baueinheiten: eines ersten Frequenzvervielfachers (20), bei dem der Eingang an die Quelle (7) des elektrischen Steuersignals und der Ausgang an den Eingang der Vorrichtung (14) zur Bewegung des ersten Magnetkopfes (3) sowie an den Eingang des ersten Verzögerungsgliedes (19) angeschlossen sind; eines Impulsformers (21); eines zweiten Frequenzvervielfachers (22); eines Impulszählers (23) mit dem am Ausgang des Impulsformers (21) liegenden Einstelleingang; sowie eines Umschalters (24), bei dem die Steuereingänge an die Stellenausgänge des Impulszählers (23), der Analogsignaleingang an die Quelle (25) des elektrischen Informationssignals und die Ausgänge an die Wicklungen (12) der Magnetköpfe (3) angeschlossen sind, wobei die Magnetköpfe (3) so eingebaut sind, daß der Magnetleiter (11) jedes Magnetkopfes (3) bei der Schwingungsbewegung die Oberfläche des magnetischen Trägers (1) stets berührt.

FIG.2

FIG.3

0341320

FIG.4

# INTERNATIONAL SEARCH REPORT

International Application No  PCT/SU 88/00227

## I. CLASSIFICATION OF SUBJECT MATTER (if several classification symbols apply, indicate all) [6]

According to International Patent Classification (IPC) or to both National Classification and IPC

IPC[4] – G 11 B 5/02

## II. FIELDS SEARCHED

| Minimum Documentation Searched [7] | |
|---|---|
| Classification System | Classification Symbols |
| IPC[4] | G 11 B 5/02,5/027,5/52 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | Tekhnika magnitnoi videozapisi, pod redaktsiei V.I. Parkhomenko, 1978, Energia (Moscow), see pages 11, 180 | 1 |
| A | Novoe v zhizni, nauke i tekhnike, seria "Radioelektronika i svyaz", No 2, 1986, (Znanie, Moscow) I.V. Fridlyand et al. "Bytovye videomagnitofony", see pages 8, 21, 27, 36, 37, figure 3; (cited in the description) | 1 |
| A | JP, A, 61-45402, 05 March 1986 (05.03.86), see figures 1-3 (cited in the description) | 1,2 |
| A | CH, A5, 660809, (Stefan Kudelski), 15 June 1987 (15.06.87), see figures 2,8,9,4,12,18, the abstract; (cited in the description) | 1,2 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 19 January 1989 (19.01.89) | 01 March 1989 (01.03.89) |
| International Searching Authority | Signature of Authorized Officer |
| ISA/SU | |

Form PCT/ISA/210 (second sheet) (January 1985)